# EUROPÄISCHE PATENTSCHRIFT

(11) **EP 0 639 162 B1**
(45) Veröffentlichungstag und Bekanntmachung des Hinweises auf die Patenterteilung: **05.11.1997**
(21) Anmeldenummer: 93909891.9
(22) Anmeldetag: 05.05.1993
(51) Int. Cl.: C02F 9/00, C02F 1/72, C02F 1/32, C02F 1/70

(54) **VERFAHREN UND VORRICHTUNG ZUR ZERSTÖRUNG VON FREIEN UND KOMPLEXEN CYANIDEN, AOX, MINERALÖL, KOMPLEXBILDNERN, CSB, NITRIT, CHROMAT UND ABTRENNUNG VON METALLEN IN ABWÄSSERN**
PROCESS AND DEVICE FOR DESTROYING FREE AND COMPLEX CYANIDES, AOX, MINERAL OIL, COMPLEXING AGENTS, CSB, NITRITE, CHROMATE, AND FOR SEPARATING METALS FROM WASTE WATERS
PROCEDE ET DISPOSITIF PERMETTANT DE DETRUIRE DES CYANURE LIBRE ET COMPLEXES, DES AOX, DE L'HUILE MINERALE, DES AGENTS COMPLEXANTS, DES CSB, DU NITRITE, DU CHROMATE ET DE SEPARER DES METAUX CONTENUS DANS DES EAUX USEES

(30) Priorität: 06.05.1992 DE 4214974
(43) Veröffentlichungstag der Anmeldung: 22.02.1995
(73) Patentinhaber: Massholder, Karl F., Dr., 69250 Altneudorf (DE)
(72) Erfinder: MASSHOLDER, Karl, F., D-6917 Altneudorf (DE); WERZ, Wilfried, D-6900 Heidelberg (DE); ECKER, Erwin, D-6909 Walldorf (DE)
(74) Vertreter: Meyers, Hans-Wilhelm, Dr.Dipl.-Chem.
(86) Internationale Anmeldenummer: EP9301087
(87) Internationale Veröffentlichungsnummer: WO9322249

(56) Entgegenhaltungen:
- EP-A- 0 015 152
- DE-A- 3 501 528
- FR-A- 2 197 821
- FR-A- 2 303 766
- PATENT ABSTRACTS OF JAPAN vol. 9, no. 267 (C-310)(1990) 24. Oktober 1985

## Beschreibung

Die Erfindung betrifft ein Verfahren und eine Vorrichtung zur Zerstörung von Schadstoffen in Abwässern, die beispielsweise mit Cyaniden, Komplexbildnern, Mineralöl, AOX, CSB, Chromat, Nitrit und anderen Schadstoffen wie Metallen belastet sind.

Eine breit angewandte Entgiftungsmethode für die Entgiftung solcherart belasteter Abwässer besteht im wesentlichen aus der Cyanidentgiftung mit Chlorbleichlauge und einer nachfolgenden Chromatreduktion mit Natriumhydrogensulfit (Hartinger, Handbuch der Abwasser- und Recyclingtechnik, Hanser Verlag München, 2. Auflage S. 292 ff.).

Die Cyanidentgiftung mit Chlorbleichlauge erfolgt hierbei bei einem pH-Wert von ca. 10 und ist mit einer beträchtlichen Aufsalzung verbunden. Darüberhinaus führt die Umsetzung von Chlorbleichlauge mit organischen Inhaltsstoffen, wie z.B. Glanzbildnern und Tensiden zur Bildung von sogenannten absorbierbaren organischen Stoffen (AOX).

Die sogenannten leicht freisetzbaren Cyanide können mit diesem Verfahren quantitativ entgiftet werden. Komplexe Cyanide wie die von Kupfer und Nickel, bedürfen einer sehr langen Reaktionszeit während überaus starke komplexe Cyanide wie die des Eisens von Chlorbleichlauge nicht bzw. nicht quantitativ zerstört werden.

Unvollständig zerstörte komplexe Cyanide verunmöglichen die Fällung des Zentralatoms als Hydroxid und führen durch Rückdissoziation zu einem Anstieg des Gehaltes an freiem Cyanid (siehe hierzu Hartinger, Handbuch der Abwasser- und Recyclingtechnik, 2. Auflage 1991, S. 44). Weitere Komplexbildner, wie z.B. EDTA oder NTA werden durch Chlorbleichlauge nicht zerstört.

Die sich anschließende Reduktion des Chromates mit Natriumhydrogensulfit erfolgt nach Einstellung des pH-Wertes auf ≤ 2,5 und ist durch die hierzu notwendige Zugabe von Säure mit einer weiteren Aufsalzung des Abwassers verbunden. Wie die Cyanidentgiftung mit Chlorbleichlauge, kann die Chromatentgiftung durch die Messung des Redoxpotentiales verfolgt und auch gesteuert werden.

Ein so von Cyaniden und Chromaten befreites Abwaser kann durch verschiedene Einrichtungen von gelösten Metallen durch Ausfällung, der entsprechenden Hydroxide gereinigt werden. Auch hierzu ist - sofern durch die Anwesenheit weiterer Komplexbildner wie EDTA oder NTA welche durch Chlorbleichlauge nicht zerstört werden - dies nicht verunmöglicht wird (Hartinger S. 206 ff.) und sofern Chromate zu reduzieren waren - zu der Einstellung des Fällungs-pH-Wertes ein nochmaliger Zusatz einer Hilfs-Chemikalie - hier einer Lauge - erforderlich, die zu einer weiteren Aufsalzung des Abwassers führt.

Insgesamt können durch die Entgiftungsmethode Chlorbleichlauge und Natriumhydrogensulfit zwar leicht freisetzbare Cyanide und Chromate zuverlässig zerstört werden. Bei komplexen Cyaniden ist jedoch kein quantitativer Abbau zu erzielen, so daß bei der Hydroxidfällung die Metalle nicht vollständig ausgefällt werden können, vielmehr als leichtlösliche komplexe Cyanide im Abwasser ausgetragen werden, und somit zu einer erhöhten Metallbelastung beitragen.

Durch die Entgiftungsmethode der Chlorbleichlaugen- und Natriumhydrogensulfit-Behandlung wird das Abwasser durch die Chlorbleichlauge und die zur pH-Wert-Einstellung erforderlichen Säuren und Laugen stark salzhaltig und insbesondere durch die Verwendung von Salzsäure mit AOX belastet. Eine weitere bedeutende AOX-Quelle besteht in der unspezifischen Reaktion von Chlorbleichlauge mit organischen Inhaltsstoffen, so daß die AOX-Grenzwerte von 1 mg/1 bzw. 0,5 mg/1 in der Regel nicht unterschritten werden können. Folgerichtig sind diese Grenzwerte in der galvanischen Industrie auch bislang ausgesetzt.

Es hat deshalb nicht an Versuchen gefehlt, die Entgiftungsmethode Chlorbleichlauge und Natriumhydrogensulfit so zu modifizieren bzw. durch andere Verfahren zu ersetzen, welche die o.g. Nachteile nicht aufweisen. Dabei wurde insbesondere sehr oft versucht, Chlorbleichlauge zu ersetzen, z.B. durch Wasserstoffsuperoxid.

So beschreibt DE 40 14 023 ein Verfahren, bei dem das Abwasser angesäuert, die so aus den Cyaniden freigesetzte Blausäure mittels eines Luftstromes ausgetrieben und in einer Absorptionsflüssigkeit z.B. Natronlauge aufgefangen wird. In dieser Natronlauge können die Cyanide dann mit Chlorbleichlauge entgiftet werden, ohne daß es zu einer AOX-Bildung kommt. Auch wäre dann eine Cyanidzerstörung mit anderen Mitteln wie Ozon oder Persauerstoffverbindungen (Wasserstoffperoxid, Natriumpersulfat, Kaliummonoperoxosulfat-Verbindungen, (Caroat^{R})) durchführbar. Dies ist jedoch mit einem erhöhten technischen Aufwand verbunden, der zudem noch erhebliche sicherheitstechnische Probleme aufwirft, die mit der Handhabung der möglicherweise auftretenden äußerst toxischen Blausäuregase verbunden sind.

DE 27 09 722 beschreibt ein Verfahren, bei dem ebenfalls mit Säure und Luft, Blausäure ausgetrieben wird. Die Zerstörung der Blausäure erfolgt dann in einer Flamme.

Die Verfahren gemäß DE 29 53 005 A1, DE 24 39 189 und DE 35 27 589 schlagen schließlich die Verwendung von Ozon zur Cyanidentgiftung vor. Ungeachtet des kostenintensiven Einsatzes von Ozon sollen damit Cyanide ohne AOX-Bildung und Aufsalzung entgiftet werden. Es ist jedoch aus der Literatur bekannt (z.B. Hartinger, Handbuch der Abwasser- und Recyclingtechnik, 2. Auflage 1991, S. 55), daß komplexe Cyanide durch Ozon nicht vollständig zerstört werden.

Es fehlt dementsprechend auch nicht an Versuchen, Ozon durch die Kombination Luft bzw. Sauerstoff plus Katalysator zu ersetzen wie in DE 27 35 301 beschrieben.

Umfangreich sind die vorgeschlagenen Verfahren zur elektrolytischen Entgiftung der Cyanide, z.B. DE 22 51 442 oder DD 217 992 Al mit denen hochkonzentrierte Cyanidlösungen bei gleichzeitiger elektrolytischer Abscheidung von Metallen entgiftet werden können. Mit diesem Verfahren ist jedoch keine vollständige Cyanidentgiftung möglich, so daß sich daran eine weitere Restcyanidentgiftung anschließen muß.

Es hat in der Vergangenheit nicht an Versuchen gefehlt, Chlorbleichlauge durch Wasserstoffsuperoxid zu ersetzen.

Im Gegensatz zur Chlorbleichlauge reagiert Wasserstoffsuperoxid jedoch langsamer und noch unvollständiger mit komplexen Cyaniden. Bei einem zu schnellen Zusatz von Wasserstoffsuperoxid kann es zu einer Überdosierung, verbunden mit einer starken Schaumbildung kommen, die oftmals zu einem Überschäumen der Reaktionsbehälter führt, insbesondere in Anwesenheit von gelösten Metallen oder Metallhydroxiden, die H₂O₂ zersetzen. Damit fand diese Methode keine weitverbreitete Anwendung. Die ungenügende Reaktionsfähigkeit des H₂O₂ suchte man deshalb zu steigern, z.B. durch Zusatz von Persauerstoffverbindungen wie Caroat^{R} oder gleichzeitige Einstrahlung von ultravioletter Strahlung.

Die DE-A-35 01 528 beschreibt ein Verfahren zum Abbau organischer Verbindungen in wäßrigen Lösungen durch Zugaben von Wasserstoffperoxid, bei gleichzeitiger Einwirkung von UV-Licht. Zusätzlich werden Hilfsstoffe, wie Eisen- und Calciumsalze eingesetzt. Jedoch kann nach der DE 35 01 528 keine technische Umsetzung gelingen, da mit Ausnahme des mit einem 10 - 75 molaren Überschusses an Wasserstoffperoxid die ultraviolette Strahlung weder in der Wellenlänge oder einem Wellenlängenbereich, noch in der Intensität oder in einem technischen UV-Strahler definiert wurde.

Die JP-A-60 118283 (Abstract) beschreibt ein Verfahren zur Reinigung von Abwässern mittels Umkehr-Osmosemembranfilter. Das Filtrat wird dann durch Zugabe von H₂O₂ und UV-Bestrahlung weiterbehandelt und anschließend durch einen Ionenaustauscher-Filter geleitet.

Ungeachtet den zuvor beschriebenen Anstrengungen, die Verwendung von Chlorbleichlauge zur Cyanidentgiftung zu optimieren bzw. durch andere zumindest gleich reaktive Reagenzien zu ersetzen, bleibt die Schwierigkeit komplexe Cyanide vollständig zu entgiften wie auch die Zerstörung anderer Komplexbildner, so daß nach den verschiedenen Verfahren der Metallhydroxidfällung der Metallgehalt in den behandelten Abwässern zuverlässig unter die gesetzlichen Grenzwerte abgesenkt werden kann. Auch fehlt bislang eine passende Technologie, um ohne den übermäßigen Einsatz von Hilfschemikalien wie Säure und Lauge Chromate zu reduzieren und die Fällung der Metalle als Metallhydroxide durchzuführen.

Aufgabe der Erfindung ist die Bereitstellung eines Verfahrens, das die oben genannten Nachteile vermeidet und eine sichere Aufbereitung von mit Schadstoffen belasteten Abwässern gewährleistet. Erfindungsgemäß gelöst wird diese Aufgabe durch ein Verfahren mit den Merkmalen des Anspruchs 1.

Die folgenden Unteransprüche betreffen bevorzugte Ausführungsformen des erfindungsgemäßen Verfahrens.

Die Entgiftung der Cyanide und anderer Komplexbildner erfolgt vorzugsweise im alkalischen Bereich im wesentlichen mit Wasserstoffsuperoxid und UV-Strahlung geeigneter Wellenlänge und Intensität. Für diese Behandlung werden Einzelheiten offenbart, die die Anwendung von H₂O₂ technisch und wirtschaftlich erlauben. Daran schließt sich eine Chromatreduktion noch im alkalischen Bereich mittels Natriumdithionit an, so daß eine pH-Einstellung und damit der Einsatz von Säure entfallen kann. Vielmehr senkt das verwendete Natriumdithionit den pH-Wert und führt so in Richtung des Fällungs-pH-Wertes zur Hydroxidfällung, so daß auch der Zusatz einer Hilfschemikalie - hier einer Lauge - stark verringert werden kann. Nach Durchführung der Metallhydroxidfällung entsprechend dem Stand der Technik, wird das Filtrat über einen Selektiv-Ionenaustauscher geleitet und dort von weiteren Metallen befreit, so daß das abzugebende Abwasser frei von Cyaniden, weiteren Komplexbildnern, Metallen, AOX und der Gehalt an CSB und Mineralöl drastisch reduziert ist. Das Regenerat der Selektiv-Ionenaustauscher kann zu Anfang des Prozesses/Verfahrens wieder aufgegeben werden. Nitrit wird in den beiden Verfahrensstufen, in denen mit H₂O₂ gearbeitet wird, quantitativ zu Nitrat umgesetzt.

Das Verfahren ist nachfolgend in einer Ausführungsform aus 5 Verfahrensstufen im Detail beschrieben:
- Stufe 1: Vorbehandluug des Abwasserstromes mit Wasserstoffsuperoxid
- Stufe 2: Behandlung des Abwasserstromes mit Wasserstoffsuperoxid und UV-Strahlung geeigneter Wellenlänge(n) und Intensität
- Stufe 3: Metallentgiftung, insbesondere Chromatentgiftung mit Reduktionsmitteln wie Natriumdithionit
- Stufe 4: Fällung und Abtrennung von Metallhydroxiden nach dem Stand der Technik
- Stufe 5: Behandlung des Filtrates aus Stufe Nr. 4 mittels eines Selektiv-Ionenaustauschers

In der Vorbehandlungsstufe werden insbesondere große Mengen an leicht freisetzbaren Cyaniden zerstört.

Bislang kam es durch die unsachgemäße Anwendung von Wasserstoffsuperoxid oft zu einer unkontrollierten Reaktion, die über eine Schaumbildung hin zu einem starken Überschäumen der Reaktionsbehälter führte. Dieses Uberschäumen ist in einer unspezifischen Zersetzung - und damit auch unwirtschaftlichen Anwendung - von H₂O₂ begründet und möglicherweise ein Grund für die Verhinderung der breiten Anwendung dieser Verfahrensweise.

Vorzugsweise wird erfindungsgemäß wie folgt vorgegangen: Das Gesamtabwasser inklusive aller Trübungen und Niederschläge wird auf einen pH-Wert von 10,0 ± 1 eingestellt, wobei dem höheren pH-Wert in der Regel der Vorzug zu geben ist.

In diesen Abwasserstrom wird unter kräftigem Aufrühren H₂O₂ in einer mäßigen Geschwindigkeit, z.B. zwischen 0,5 - 2 kg H₂O₂ (bezogen auf Reinstubstanz) pro m³ und Stunde diskontinuierlich eingegeben. Die Dosiergeschwindigkeit bemißt sich nach dem Gesamtgehalt an Metallen in der Weise, daß bei hohen Metallkonzentrationen mit niedriger Geschwindigkeit eindosiert wird. H₂O₂ wird solange zudosiert, bis entweder eine Schaumbildung oder ein Sprung im Redoxpotential auftritt. Die Schaumbildung kann mit einer handelsüblichen Elektrode vermessen werden. Die Messung des Redoxpotentiales erfolgt nach dem Stand der Technik. Sobald entweder die Schaumbildung oder der Redoxsprung auftritt, ist die weitere Zugabe von H₂O₂ zu stoppen. Dies kann automatisch erfolgen. Der pH-Wert ist dabei oberhalb von pH 8 zu halten.

Damit ist in der Regel der Gehalt an freiem Cyanid zerstört und der Abwasserstrom wird der nächsten Behandlungsstufe zur Zerstörung der komplexen Cyanide, weiteren Komplexbildnern, AOX und CSB zugeführt.

Bei einem sehr niedrigen Gehalt an freiem Cyanid kann diese erste Stufe auch übersprungen werden. Da in Abwässern der galvanischen Industrie unter Umständen möglicherweise sehr hohe Metallkonzentrationen auftreten können, sollte diese Vorbehandlung mit H₂O₂ vorzugsweise chargenweise in Behältern durchgeführt werden, welche nur zu ca. 70 % befüllt werden und mit einem Überlauf und einem weiteren Behälter zur evtl. Aufnahme des Restvolumens ausgerüstet sind.

In dem darauf folgenden Verfahrensabschnitt können komplexe Cyanide aufgearbeitet werden. Selbst bei einer vollständigen Zerstörung der leicht freisetzbaren Cyanide kommt es in Anwesenheit bestimmter Metallionen und komplexer Cyanide, wie z.B. denjenigen des Eisens und des Nickels nach einiger Zeit zu Freisetzung von leicht freisetzbaren Cyaniden. Es stellt sich in solchen Lösungen aus Rückdissoziation eine solche Konzentration an leicht freisetzbaren Cyaniden ein, wie sie z.B. dem Massenwirkungsgesetz entspricht (siehe hierzu Hartinger Tabelle 3 - 1, S. 44). Daraus ergibt sich auch, daß insbesondere bei einem hohen Gehalt an komplexen Cyaniden diese zu einem überwiegenden Anteil zerstört werden müssen, damit letztendlich die durch den unvermeidlichen Prozeß der Rückdissoziation entstehende Konzentration an leicht freisetzbaren Cyaniden unter den zulässigen Grenzwerten liegt.

Auch sind die Konzentrationsgrenzwerte für die Metalle insbesondere nur dadurch einzuhalten, daß z.B. deren Bindung mit Komplexbildnern durch Zerstörung der Komplexe und/oder Komplexbildner aufgebrochen wird. Dadurch sind solche zunächst komplexierte Metallionen mittels einer Metallhydroxidfällung aus dem Abwasser zu entfernen.

Zur Zerstörung von komplexen Cyaniden wie auch anderen Komplexbildnern, AOX und CSB wird der zu behandelnde Abwasserstrom (auch inklusive aller Trübungen und Niederschläge) unter Zusatz von H₂O₂ einer UV-Oxidation unterzogen.

Der Abwasserstrom wird mit H₂O₂ versetzt und UV-Strahlung nachstehender Wellenlängen und Intensität ausgesetzt. Die Reaktionsführung muß dabei sicherstellen, daß bei chargenweiser Behandlung das gesamte Behältervolumen mindestens einmal vollständig an dem oder den UV-Strahlern vorbeigeführt wird.

Gleichgültig ob dieser Abwasserstrom einer Vorbehandlung unterzogen wurde oder nicht, ist der Zusatz an Wasserstoffsuperoxid so zu bemessen, daß das ursprüngliche Redoxpotential nach der UV-Oxidation gehalten werden bzw. in die "andere Richtung" gezogen wird. Unter der "anderen Richtung" ist diejenige gegenläufige Veränderung des Redoxpotentials zu verstehen, die sich aus der alleinigen UV-Bestrahlung (ohne Zusatz von H₂O₂) ergibt.

Geeignete UV-Strahlung liegt im Bereich zwischen 185 und 400 nm, wobei die entsprechenden technischen UV-Strahler eine minimale Leistungsdichte von 40 W/cm, bezogen auf die elektrische Leistungsaufnahme, aufweisen sollten.

Der pH-Wert kann hierbei in weiten Bereichen (pH > 7 - 2) variieren, die Temperatur kann zwischen 10°C bis 60°C betragen, so daß in der Regel weder eine Einstellung des pH-Wertes oder der Reaktionstemperatur zu erfolgen hat. Insbesondere Abwässer aus der Metallindustrie oder von galvanischen Betrieben müssen nicht (mittels Säure/ Lauge) auf einen optimalen pH-Wert eingestellt werden. Vorhandene Trübungen und Niederschläge brauchen vor der UV-Oxidation nicht abgetrennt zu werden.

Sobald das gemessene Redoxpotential konstant bleibt, ist die Zerstörung der komplexen Cyanide und weiterer Komplexbildner, wie auch von AOX, Mineralöl und CSB abgeschlossen und der Abwasserstrom kann der Chromatentgiftung zugeführt werden.

Ein wie vorstehend beschrieben behandeltes Abwasser kann nun der Chromatentgiftung zugeführt werden. Hierbei wird über die Zugabe von Reduktionsmitteln wie Natriumdithionit Chromat zu dreiwertigem Chrom reduziert und damit die Fällung als Chromhydroxid ermöglicht- Die Zugabe von Natriumdithionit erfolgt über die Messung des Redoxpotentials.

Es werden Reduktionsmittel wie Natriumdithionit verwendet, die auch komplexe Cyanide spalten können, die in Restmengen noch vorhanden sein können. Dabei freigesetztes Cyanid kann an dieser Stelle durch Persauerstoffverbindungen, wie z.B. H₂O₂ oder Salzen von Peroxosäuren zerstört werden.

Der pH-Wert für diese Chromatentgiftung darf im Bereich pH 4 - 12 variieren; Trübungen und Niederschläge müssen hierzu nicht abgetrennt werden.

Die Metallhydroxidfällung erfolgt nach dem Stand der Technik unter eventueller Zuhilfenahme von Flockungshilfsmitteln, desgleichen die Abtrennung der Metallhydroxide. Vorzugsweise erfolgt die Abtrennung der Niederschläge nach Sedimentation mittels einer Kammerfilterpresse. Durch die relativ geringen Mengen an Säure/Lauge zur pH-Wert-Einstellung wird der Salzgehalt in einem weitaus geringeren Maße erhöht, so daß sich sowohl eine bessere Filtrierbarkeit als auch eine längere Standzeit der Filtrationseinrichtung, insbesondere Filtertüchern der Kammerfilterpresse ergibt.

Ein gemäß der Erfindung behandeltes Abwasser enthält nach der Abtrennung der Niederschläge noch geringe Gehalte an gelösten Metallen, welche die gesetzlichen Grenzwerte überschreiten können.

Zur Abtrennung dieser Metallrestmengen kann das Filtrat nach der Stufe 4 über einen Selektiv-Ionenaustauscher, vorzugsweise vom Typ LEWATIT TP 207 der Firma BAYER geleitet werden. Diesem Ionenaustauscher kann zur Zurückhaltung von Trübstoffen ein Kiesbettfilter vorgeschaltet, der daneben noch geringe Anteile an Hydroanthracit enthält.

Durch den im Vergleich zu den bisherigen Methoden wesentlich verringerten Gehalt an Neutralsalzen kann der Ionenaustauscher wesentlich ökonomischer genutzt werden, da die Beladungskapazität höher liegt. Nach vollständiger Beladung kann das Regenerat des Ionenaustauschers wie auch die Spülflüssigkeit für den Kiesbettfilter an den Anfang des Verfahrens zurückgegeben werden.

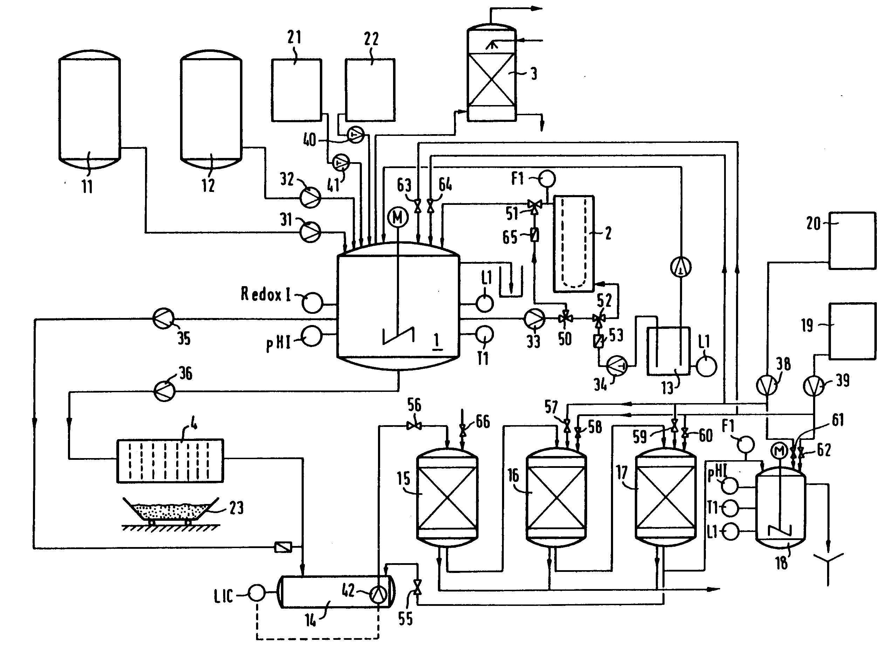

In der Figur wird das erfindungsgemäße Verfahren in Form eines Fließschemas näher erläutert. Nach dem erfindungsgemäßen Verfahren beginnt die Abwasserbehandlung im Reaktionsgefäß 1, das vorzugsweise einen Überlaufbehälter und ein Rührwerk aufweist. In dem Reaktionsgefäß 1 werden die Entgiftung des Abwassers von freien Cyaniden, die Zerstörung von komplexen Cyaniden und die Reduktion von Metallen mit hoher Oxidationsstufe vollzogen. Dazu wird das zu behandelnde Abwasser, beispielsweise nach Zwischenpufferung in den Vorlagebehältern 11 und 12 mittels der Förderpumpen 31 und 32, eingefüllt. In einer bevorzugten Ausführungsform ist das Reaktionsgefäß 1 mit Vorrichtungen zur Messung von Füllstand, Temperatur, pH-Wert sowie Redoxpotential versehen, welche zur Regelung des Behandlungsprozesses geeignet sind. Eine Einrichtung zur Überwachung von Schaumbildnung hat sich ebenfalls bewährt. Das Reaktionsgefäß ist vorzugsweise mit einem Überlauf versehen und an einen Abgaswäscher 3 angeschlossen. Somit können auch Spuren von unerwünschten gasförmigen Produkten nicht ausgetragen werden.

Nach Befüllung des Reaktionsgefäßes 1 und Einstellung und Regelung des notwendigen pH-Wertes wird der Abwasserstrom mittels der Pumpe 33 über die Ventile 50, 65 und 51 umgepumpt und mit Wasserstoffperoxid versetzt. Die Dosierung von Wasserstoffperoxid erfolgt beispielsweise über die Dosierpumpe 34 und das Dreiwegeventil 52 mit einer geeigneten Fördergeschwindigkeit bis beispielsweise ein Sprung im Redoxpotential, welches im Reaktionsgefäß gemessen wird, eintritt oder die Schaumbildung einsetzt.

Nach der Entgiftung des Abwassers von freien Cyaniden mittels Wasserstoffperoxid kann die Spaltung und Entgiftung der komplexen Cyanide durch Bestrahlung des Abwassers mittels UV-Strahlung unter Zusatz von Wasserstoffperoxid in einem oder mehreren UV-Reaktoren 2 erfolgen. Dabei wird das zu behandelnde Abwasser im Kreislauf zwischen Reaktionsgefäß 1 und UV-Reaktor 2 geführt, wobei das gesamte Volumen des Reaktionsgefäßes 1 bis zum Endpunkt der Entgiftungsreaktion einmal oder mehrmals durch den UV-Reaktor 2 geleitet wird und bis zum Erreichen des Endproduktes mit der notwendigen Menge an Wasserstoffperoxid versetzt und der UV-Strahlung ausgesetzt wird.

Ist die Entgiftung der freien und komplexen Cyanide abgeschlossen, schließt sich die Reduktion der höher oxidierten Metallverbindungen mittels Reduktionsmitteln, beispielsweise sechswertigem Chrom mittels Natriumdithionit, an. Die Reduktion erfolgt ebenfalls im Reaktionsgefäß 1. Der Zusatz des Reduktionsmittels wie Natriumdithionit erfolgt vorzugsweise über einen Vorlagebehälter 22 und die Dosierpumpe 31. Es ist ebenfalls auch möglich, das Reduktionsmittel, falls es als Festkörper vorliegt, beispielsweise in pulverförmiger Form dem Reaktionsgefäß 1 über Schütteinrichtungen zuzuführen.

Nach Beendigung der Reduktion der höher oxidierten Metallionen kann sich noch eine weitere Entgiftung (von Cyanidspuren), beispielsweise mittels eines weiteren Oxidationsmittels wie Persulfat, anschließen. Der Zusatz des Oxidationsmittels wie Persulfat kann beispielsweise über den Vorlagebehälter 21 und die Dosierpumpe 41 oder in anderer geeigneter Weise erfolgen.

Nach diesen Reaktionsstufen schließt sich die Ausfällung und Abtrennung von Metallhydroxiden an. Dies kann in an sich bekannter Weise gemäß Stand der Technik erfolgen. Die jeweiligen pH-Werte zur Einstellung des Abwassers oder auch Fällung der metallischen Schadstoffe als Hydroxide erfolgen beispielsweise durch Zuführung von Laugen oder Säuren aus den Vorratsbehältern 19, 20 über Förderpumpen 38, 39, die jeweils mit den Ventilen 63 und 64 zuschaltbar sind. Gegebenenfalls kann zur Unterstützung der Präzipitation der betreffenden Metallhydroxide der Zusatz von Flockungshilfsmitteln vorteilhaft sein.

Nach Fällung der metallischen Schadstoffe als Hydroxide und Sedimentation derselben wird die Klarphase über die Medienpumpe 35 direkt in die Pumpvorlage der Pumpe 14 gefördert. Die Metallhydroxide selbst werden vom Boden des Reaktionsgefäßes 1 abgezogen und in der Kammerfilterpresse 4 abgepreßt. Der dabei erhaltene Filterkuchen aus 4 wird beispielsweise über einen Schlammwagen 23 abtransportiert und das Filtrat zur Pumpvorlage 14 verbracht.

In dem mit der Klarphase vereinigten Filtrat, das in der Pumpvorlage 14 gesammelt ist, können auch in Spurenmengen vorhandene Metallionen abgetrennt werden. Hierzu werden nach der Abtrennung von kolloidalen Festkörperpartikeln mittels eines rückspülbaren und Aktivkohle enthaltenden Filters, vorzugsweise eines Kiesbettfilters 15, die vereinigten Wasserströme mittels der Medienpumpe 52 über die Ionenaustauscher 16 und 17 geleitet und in dem Behälter für die Endkontrolle 18 gesammelt. Der Behälter für die Endkontrolle 18 weist vorzugsweise ein Rührwerk und einen Ablauf auf.

Die Ionenaustauschermaterialien werden nach dem Stand der Technik regeneriert und die Regenerate können am Anfang des Prozesses aufgegeben werden. Das gleiche gilt für den rückspülbaren Kiesbettfilter.

Vor Abgabe des so behandelten Abwasserstromes in den Abwasserkanal wird das im Behälter der Endkontrolle 18 gesammelte Wasser auf den Schadstoffgehalt untersucht und falls notwendig auf den zulässigen pH-Wert eingestellt.

Die Vorrichtung zur Durchführung des erfindungsgemäßen Verfahrens weist mindestens ein Reaktionsgefäß 1 auf. Damit ist über Zu- und Abläufe mindestens ein UV-Bestrahlungsreaktor 2 verbunden dergestalt, daß das zu behandelnde Abwasser in einem Kreislauf zwischen Reaktionsgefäß und UV-Bestrahlungsreaktor 2 geführt werden kann. Zur kontinuierlichen Gestaltung des an sich diskontinuierlichen Prozesses werden vorzugsweise Vorlagebehälter für das zu behandelnde Abwasser 11 bereitgestellt, in denen beispielsweise galvanische Abwässer zwischengelagert werden. Das für die Behandlung des Abwassers gemäß dem erfindungsgemäßen Verfahren notwendige Wasserstoffperoxid wird im Vorratsbehälter 13 aufbewahrt. Dementsprechend sind ebenfalls vorzugsweise Vorratsbehälter für Reduktionsmittel 22 wie Dithionit vorgesehen. Die Vorratsgefäße mit den zur Durchführung der Reaktion notwendigen Chemikalien sind mittels Leitungen mit dem Reaktionsgefäß 1 verbunden.

Weitere Einrichtungen der Vorrichtung zur Durchführung des erfindungsgemäßen Verfahrens sind ebenfalls der Figur entnehmbar.

Das nachfolgende Beispiel demonstriert das erfindungsgemäße Verfahren.

### Beispiel 1

In einer Spülwasser aus der galvanischen Industrie wurde der Metallgehalt wie auch der Cyanidgehalt unter die gesetzlichen Grenzwerte abgesenkt. Das im Abwasser vorhandene Chromat wurde durch Reduktion mit Natriumdithionit zerstört. Die Tabelle 3 gibt die einzelnen Konzentrationen der Schadstoffe im Rohwasser und im Endkontrollschacht in mg/l wieder.

**TABELLE 1**

| Spülwasser aus der Galvanik | | | | |
|---|---|---|---|---|
| | Cyanid frei (mg/l) | Kupfer (mg/l) | Nickel (mg/l) | Chrom (mg/l) |
| Rohwasser | 172 | 1,9 | 45,0 | 1,3 |
| Endkontrollschacht | 0,003 | 0,3 | 0,1 | 0,1 |

### Legende:

### Reaktoren:

- 1 :: Reaktionsgefäß mit Überlaufbehälter und Rührwerk
- 2 :: UV-Bestrahlungsreaktor
- 3 :: Abgas-Waschturm
- 4 :: Kammerfilterpresse für die Sedimente des Chargenreaktors

### Behälter:

- 11 :: Vorlagebehälter 1 für Betriebsabwasser
- 12 :: Vorlagebehälter 2 für Betriebsabwasser
- 13 :: Vorratsbehälter für Wasserstoffperoxid
- 14 :: Pumpvorlage für Kiesbettfilter und Ionentauscher
- 15 :: Druckbehälter für Kiesbettfilter
- 16 :: Druckbehälter für Selektivionenaustauscher 1
- 17 :: Druckbehälter für Selektivionenaustauscher 2
- 18 :: Endkontrollbehälter mit Rührwerk und Ablauf zum Kanal
- 19 :: Vorratsbehälter für Lauge
- 20 :: Vorratsbehälter für Säure
- 21 :: Vorratsbehälter für Oxidationsmittel-Lösung
- 22 :: Vorratsbehälter für Reduktionsmittel-Lösung
- 23 :: Schlammwagen oder -Container zum Abtransport des Filterkuchens

### Pumpen:

- 31 :: Vorlage-Kreiselpumpe für 11
- 32 :: Vorlage-Kreiselpumpe für 12
- 33 :: Förderpumpe für UV-Bestrahlungsreaktor
- 34 :: Dosierpumpe für das Wasserstoffperoxid in den UV-Bestrahlungskreislauf
- 35 :: Förderpumpe für den Hauptwasserstrom
- 36 :: Förderpumpe für den Sedimentstrom zur Kammerfilterpresse
- 37 :: Dosierpumpe für das Wasserstoffperoxid in den Chargenreaktor
- 38 :: Förderpumpe für Säurezugabe
- 39 :: Förderpumpe für Laugezugabe
- 40 :: Dosierpumpe für Reduktionsmittel-Lösung
- 41 :: Dosierpumpe für Oxidationsmittel-Lösung
- 42 :: Förderpumpe

### Ventile:

- 50,51,65 :: Dreiwege-Venile mit Rückschlagklappe für den Bypass des UV-Bestrahlungsreaktors
- 52,53 :: Dosierventil mit Rückschlagklappe für Wasserstoffperoxid
- 54 :: Rückschlagklappe
- 55 :: Ventil zur Rückführung des Eluates
- 56 :: Absperrhahn für den Hauptstrom bei Regeneration
- 57,59,61,63 :: Ventile zur Zugabe von Säure
- 58,60,62,64 :: Ventile zur Zugabe von Lauge
- 66 :: Hahn für Rückspülwasser

## Patentansprüche

1. Verfahren zur Zerstörung von Schadstoffen in Abwässern, wobei der zu behandelnde Abwasserstrom sequenziell folgende Verfahrensschritte durchläuft,
- Behandlung des Abwasserstroms mit Wasserstoffperoxid (H₂O₂) bei gleichzeitiger Bestrahlung mit UV-Licht,
- Behandlung mit einem Reduktionsmittel wie Natriumdithionit,
- Fällung der vorhandenen metallischen Schadstoffe, gegebenenfalls gefolgt von einer Filtration und/oder einer Behandlung mit einem Selektiv-Ionenaustauscher.

2. Verfahren nach Anspruch 1, wobei ein Vorbehandlungsschritt vorgeschaltet wird, in dem Wasserstoffperoxid diskontinuierlich dem Abwasser zugegeben wird.

3. Verfahren nach Anspruch 1 und/oder 2, wobei UV-Licht einer Wellenlänge von 185 bis 400 nm verwendet wird.

4. Verfahren nach mindestens einem der Ansprüche 1 bis 3, wobei die das UV-Licht emittierenden UV-Strahler eine minimale Leistungsdichte von 40 W/cm bezogen auf die elektrische Leistungsaufnahme abgeben.

5. Verfahren nach mindestens einem der Ansprüche 1 bis 4, wobei die Fällung der Metalle als Hydroxidverbindungen erfolgt.

6. Verfahren nach mindestens einem der Ansprüche 1 bis 5, wobei die Behandlung cyanidhaltiger Abwässer zusätzlich mit Persulfaten erfolgt.

7. Verfahren nach mindestens einem der Ansprüche 1 bis 6, wobei im ersten Schritt die Entgiftung des Abwassers von freien und komplexen Cyaniden erfolgt.

8. Verfahren nach mindestens einem der Ansprüche 1 bis 7, wobei im zweiten Schritt Chromat mittels Natriumdithionit reduziert wird.

9. Vorrichtung zur Durchführung des Verfahrens nach mindestens einem der Ansprüche 1 bis 8 mit einem Reaktionsgefäß (1), eine darauf über Zu- und Abläufe verbundenem UV-Bestrahlungsreaktor (2), mindestens einem Vorlagebehälter für das zu behandelnde Abwasser (11), Vorratsbehälter für Wasserstoffperoxid (13), Vorratsbehälter für Reduktionsmittel (22), wobei die Behälter (11, 13, 22) mittels Leitungen mit dem Reaktionsgefäß (1) verbunden sind.

## Claims

1. A process for the destruction of harmful substances in waste waters wherein the waste water stream to be treated passes the following process steps in sequence:
- treatment of the waste water stream with hydrogen peroxide (H₂O₂) with simultaneous irradiation with UV light;
- treatment with a reductive agent, such as sodium dithionite;
- precipitation of any harmful metallic substances, optionally followed by a filtration and/or treatment with a selective ion-exchanger.

2. The process according to claim 1 wherein a pretreatment step is preliminarily performed in which hydrogen peroxide is discontinuously added to the waste water.

3. The process according to claim 1 and/or 2 wherein UV light having a wavelength of from 185 to 400 nm is used.

4. The process according to at least one of claims 1 to 3 wherein the UV radiators emitting the UV light give off a minimum power density of 40 W/cm, based on the electric power consumption.

5. The process according to at least one of claims 1 to 4 wherein said precipitation of the metals is performed in the form of hydroxide compounds.

6. The process according to at least one of claims 1 to 5 wherein the treatment of cyanide-containing waste waters is in addition performed with persulfates.

7. The process according to at least one of claims 1 to 6 wherein detoxification of the waste water from free and complex cyanides is performed in the first step.

8. The process according to at least one of claims 1 to 7 wherein chromate is reduced with sodium dithionite in the second step.

9. A device for performing the process according to at least one of claims 1 to 8 comprising a reaction vessel (1), a UV irradiation reactor (2) connected therewith via inlet and outlet lines, at least one receptor (11) for the waste water to be treated, storage container for hydrogen peroxide (13), storage container for reductive agent (22), wherein containers (11, 13, 22) are connected through lines with reaction vessel (1).

## Revendications

1. Procédé permettant de détruire les substances nocives dans les eaux usées, le courant d'eaux usées à traiter passant par les étapes successives suivantes:
- traitement du courant d'eaux usées par du peroxyde d'hydrogène (H₂O₂), en irradiant simultanément avec de la lumière UV ,
- traitement par un agent réducteur tel que le dithionite de sodium,
- précipitation des substances nocives métalliques présentes, éventuellement suivie d'une filtration et/ou d'un traitement avec un échangeur d'ions sélectif.

2. Procédé selon la revendication 1, dans lequel le procédé est précédé d'une étape de prétraitement où du peroxyde d'hydrogène est additionné, de façon discontinue, aux eaux usées.

3. Procédé selon la revendication 1 et/ou 2, dans lequel on utilise de la lumière UV d'une longueur d'onde allant de 185 à 400 nm.

4. Procédé selon au moins l'une des revendications 1 à 3, dans lequel l'émetteur UV émettant de la lumière UV fournit une densité de puissance minimale de 40 W/cm rapportée à la puissance électrique.

5. Procédé selon au moins l'une des revendications 1 à 4, dans lequel la précipitation des métaux est réalisée sous forme de composés hydroxydes.

6. Procédé selon au moins l'une des revendications 1 à 5, dans lequel on effectue le traitement des eaux usées contenant des cyanures complémentairement avec des persulfates.

7. Procédé selon au moins l'une des revendications 1 à 6, dans lequel on procède, dans la première étape, à l'élimination des cyanures libres et des cyanures complexes des eaux usées.

8. Procédé selon au moins l'une des revendications 1 à 7, dans lequel on réduit, dans la deuxième étape, les chromates par du dithionite de sodium.

9. Dispositif pour la mise en oeuvre du procédé selon au moins l'une des revendications 1 à 8 comportant un récipient réactionnel (1), un réacteur d'irradiation UV (2) relié à celui-ci par des conduits d'arrivée et de sortie, au moins un réservoir collecteur (11) pour les eaux usées à traiter, un réservoir de stockage (13) pour l'eau oxygénée, un réservoir de stockage (22) pour l'agent réducteur, les réservoirs (11, 13, 22) étant reliés au récipient réactionnel (1) par des conduits.
